# EUROPÄISCHE PATENTSCHRIFT

(11) **EP 2 676 044 B1**
(45) Veröffentlichungstag und Bekanntmachung des Hinweises auf die Patenterteilung: **15.05.2019**
(21) Anmeldenummer: 12706010.1
(22) Anmeldetag: 16.02.2012
(51) Int. Cl.: F16C 33/46

(54) **WÄLZLAGERKÄFIGSEGMENT, WÄLZLAGERKÄFIG UND VERFAHREN ZUM ZUSAMMENBAU EINES WÄLZLAGERKÄFIGS**
ROLLING BEARING CAGE SEGMENT, ROLLING BEARING CAGE AND METHOD FOR ASSEMBLING A ROLLING BEARING CAGE
SEGMENT DE CAGE POUR PALIER À ROULEMENT, CAGE POUR PALIER À ROULEMENT ET PROCÉDÉ D'ASSEMBLAGE D'UN CAGE POUR PALIER À ROULEMENT

(30) Priorität: 18.02.2011 DE 102011004374
(43) Veröffentlichungstag der Anmeldung: 25.12.2013
(73) Patentinhaber: Aktiebolaget SKF, 415 50 Göteborg (SE)
(72) Erfinder: BECK, Burkard, 97294 Unterpleichfeld (DE); BEYFUSS, Berthold, 97535 Kaisten (DE); FRIEDRICH, Hans-Jürgen, 97486 Königsberg-Römershofen (DE); HAEUSSINGER, Michael, 97072 Würzburg (DE); RADINA, Alfred, 97711 Poppenlauer (DE); SCHIERLING, Jonas, 97437 Hassfurt (DE); SCHNEIDER, Werner, 97488 Stadtlauringen (DE); VOLKMUTH, Markus, 97440 Werneck-Zeuzleben (DE); WEIGLEIN, Jürgen, 97714 Oerlenbach (DE)
(74) Vertreter: Schonecke, Mitja
(86) Internationale Anmeldenummer: PCT/EP2012/052690
(87) Internationale Veröffentlichungsnummer: WO 2012/110601

(56) Entgegenhaltungen:
- WO-A1-2011/031931
- DE-B- 1 079 899
- DE-B- 1 133 950
- DE-U- 6 918 881
- DE-U- 6 945 329
- GB-A- 1 162 570
- JP-A- 11 280 769
- JP-A- 2000 145 789
- JP-A- 2007 162 920
- US-A- 2 946 633
- US-A- 6 102 572

## Beschreibung

Die vorliegende Erfindung betrifft ein Lagerkäfigsegment für Wälzlager, einen aus derartigen Lagerkäfigsegmenten gebildeten Lagerkäfig und ein Verfahren zur Herstellung eines solchen Lagerkäfigs.

Lagerkäfige für Wälzlager bestehen im Allgemeinen aus zwei in einem axialen Abstand angeordneten Seitenringen und mehreren, diese Seitenringe verbindenden und in einer Umfangsrichtung des Lagerkäfigs hintereinander angeordneten Stegen, welche paarweise Taschen zur Aufnahme von Wälzkörpern bilden. Ein Lagerkäfig hält die Wälzkörper mittels der dafür vorgesehenen Taschen auf Abstand zueinander und verhindert eine unmittelbare Berührung benachbarter Wälzkörper, was Reibung und damit Wärmeentwicklung im Lager typischerweise verringert. Er sorgt außerdem für eine gleichmäßige Verteilung der Wälzkörper über einen gesamten Umfang des Käfigs bzw. Wälzlagers und ermöglicht so eine gleichmäßige Lastverteilung sowie einen ruhigen und gleichmäßigen Lauf.

Wälzlagerkäfige werden im Betrieb durch Reibungs-, Zerr- und Trägheitskräfte mechanisch stark beansprucht. Dazu können unter Umständen auch chemische Einwirkungen durch bestimmte Zusätze und Substanzen kommen. Formgebung und Werkstoffwahl sind deshalb für eine Funktionstüchtigkeit des Käfigs ebenso wie für eine Betriebszuverlässigkeit des Lagers, insgesamt von entscheidender Bedeutung.

Typsicherweise umfassen Wälzlagerkäfige gepresste Käfige und Massivkäfige. Gepresste Käfige für Wälzlager werden meist aus Stahlblech, in einigen Fällen auch aus Messingblech gefertigt. Massivkäfige für Wälzlager können beispielsweise aus Messing, Stahl, Aluminium, Polymeren oder Phenolharz hergestellt sein.

Kunststoffmassivkäfige, die oftmals mittels Spritzgussverfahren gefertigt werden, zeichnen sich durch eine günstige Kombination von Festigkeit und Elastizität aus. Gute Gleiteigenschaften von Kunststoff auf geschmierten Stahlflächen und eine geringe Rauheit der Käfigoberflächen an Berührungsstellen mit Wälzkörpern haben eine niedrige Käfigreibung, eine entsprechend geringe Wärmeentwicklung im Lager und einen kaum messbaren Verschleiß zur Folge. Wegen der geringen Werkstoffdichte bleiben auch Kräfte aus der Massenträgheit des Käfigs klein. Dank sehr guter Notlaufeigenschaften von Kunststoffkäfigen bleibt ein Lager selbst bei völligem Versagen der Schmierung noch für einige Zeit funktionsfähig, ohne dass es zum Blockieren des Lagers oder zu weiteren Folgeschäden kommt.

Bei Kunststoffen für herkömmlich gespritzte Wälzlagerkäfige kann es sich beispielsweise um Polyamid 66, Polyamid 46, Polyetheretherketon (PEEK), Phenolharz oder auch einen anderen Polymerwerkstoff handeln.

Bei reinen Kunststoffkäfigen besteht allerdings allgemein das Problem, dass diese für mittlere bis große Lagerdurchmesser, beispielsweise ab einem Durchmesser von ca. 300 mm, fertigungstechnisch nur schwer bzw. nicht in geforderter Qualität herstellbar sind. Dies liegt u.a. an dem Wärmeausdehnungskoeffizienten von Kunststoff, der gegenüber dem von Stahl wesentlich größer ist, so dass es bei Wärmeentwicklung zu einer Klemmwirkung der Wälzkörper in einem Kunststoffkäfig kommen kann. Durch den erhöhten Wärmeausdehnungskoeffizienten kann eine Schulterführung eines Kunststoffkäfigs nicht sichergestellt werden. Des Weiteren wird durch den erhöhten Wärmeausdehnungskoeffizienten auch eine Maßhaltigkeit in Relation zu dem Lagerkäfigdurchmesser verschlechtert. Auch die Festigkeit von Kunststoff ist in radialer Richtung gegenüber Metall deutlich eingeschränkt. Um Kunststoffkäfige mit derartig großen Durchmessern herzustellen, wären zudem komplizierte Spritzgusswerkzeuge nötig, was wiederum zu nicht akzeptabel hohen Herstellungskosten führen würde.

Es sind auch Lagerkäfige bekannt, bei denen Seitenringe und Wälzkörpertaschen bildende Lagerkäfigsegmente separat und gegebenenfalls aus unterschiedlichen Materialien ausgebildet sind. Derartige Lagerkäfige sind z.B. aus den Vorveröffentlichungen DE 69 18 881 U, JP 2000 145789 A, DE 10 79 899 B, oder US 2,946,633 A bekannt.

Vor diesem Hintergrund ist es eine Aufgabe der vorliegenden Erfindung, für mittlere bis große Lagerdurchmesser ab ca. 300 mm, Lagerkäfige mit einer für kleinere Kunststoffkäfige typischen und günstigen Kombination aus Festigkeit, Elastizität und Gleitverhalten bereitzustellen.

Die Aufgabe wird durch eine Lagerkäfigsegment, einen Lagerkäfig und ein Verfahren zum Herstellen eines Lagerkäfigs gemäß den unabhängigen Ansprüchen gelöst. Vorteilhafte Weiterbildungen sind Gegenstand der abhängigen Ansprüche.

Es ist eine Erkenntnis der vorliegenden Erfindung, dass die vorliegende Aufgabe durch einen kombinierten Metall-Kunststoff- oder Carbon-Kunststoff-Lagerkäfig gelöst werden kann, der eine Kombination von Kunststofflagerkäfigsegmenten und wenigstens einem Trägerring aus Metall oder Carbon aufweist, entlang dessen Umfang die Kunststoffkäfigsegmente platziert werden. Gemäß der vorliegenden Erfindung können also mehrere Kunststofflagerkäfigsegmente über wenigstens einen Trägerring zu einem Ringkorpus zusammengefasst werden.

Gemäß einem Aspekt der vorliegenden Erfindung ist dazu ein Lagerkäfigsegment für einen Wälzlagerkäfig mit zwei in einer Umfangsrichtung verlaufenden Umfangsstegen und wenigstens einem die Umfangsstege verbindenden Verbindungssteg vorgesehen, wobei das Lagerkäfigsegment aus einem Kunststoff gebildet ist und eine Kopplungsanordnung aufweist, die ausgebildet ist, um das Lagerkäfigsegment mittels einer Schnappverbindung auf wenigstens einem Trägerring anzuordnen, so dass mittels zweier in der Umfangsrichtung benachbart auf dem Trägerring angeordneter Lagerkäfigsegmente wenigstens eine Tasche zur Aufnahme eines Wälzkörpers gebildet werden kann.

Ausführungsbeispiele von Kunststofflagerkäfigsegmenten weisen bevorzugt genau einen die Umfangsstege verbindenden Verbindungssteg auf, so dass mittels zweier in der Umfangsrichtung benachbart auf dem Trägerring angeordneter Lagerkäfigsegmente auch nur genau eine Tasche zur Aufnahme eines Wälzkörpers gebildet wird.

Gemäß Ausführungsbeispielen kann die Kopplungsanordnung eine in wenigstens einen der Umfangsstege eingeformte Aufnahme zum formschlüssigen Aufnehmen des wenigstens einen Trägerrings umfassen.

Dabei kann das Kunststofflagerkäfigsegment derart gestaltet sein, dass der die zwei Umfangsstege verbindende Verbindungssteg in axialer Richtung verläuft, um die zwei Umfangsstege aus Kunststoff in einem vordefinierten axialen Abstand voneinander zu halten. Obwohl grundsätzlich auch Ausführungsformen vorstellbar sind, bei denen lediglich ein Trägerring zum Tragen der Lagerkäfigsegment ausreicht, weist bei bevorzugten Ausführungsbeispielen die Kopplungsanordnung in jedem der zwei axial beabstandeten Umfangsstege eingeformte Aufnahmen zum formschlüssigen Aufnehmen jeweils eines Trägerrings auf. Bei einem derartigen Ausführungsbeispiel kann ein Kunststofflagerkäfigsegment also mittels der in die Umfangsstege eingeformten Aufnahmen mit zwei axial beabstandeten Trägerringen formschlüssig gekoppelt werden. Die Aufnahmen sind also für eine Clip- bzw. Klemmverbindung ausgebildet.

Die Kopplungsanordnung kann demnach derart ausgebildet sein, dass die an einem Umfangsrandbereich bzw. an den Umfangsstegen des Kunststofflagerkäfigsegments jeweils ausgebildeten Aufnahmen als Rinnenabschnitte ausgeführt sind. Diese an den Umfangsstegen angebrachten Rinnenabschnitte können beispielsweise so gestaltet sein, dass sie in ihrem Querschnitt derart auf einen Querschnitt eines zu haltenden Trägerrings abgestimmt sind, dass ein Kunststofflagerkäfigsegment mit einem relativ belastbaren Klemmsitz auf den wenigstens einen Trägerring aufgeklemmt werden kann.

Die Kopplungsanordnung kann weiterhin so ausgebildet sein, dass ein Käfigsegment in im Wesentlichen von außen auf dem wenigstens einen Trägerring aufgesetzt wird. Dabei sind die Aufnahmen für den wenigstens einen Trägerring in einer einem zweiten Umfangssteg zugewandten Seite eines ersten Umfangsstegs eingeformt. Mit anderen Worten ausgedrückt bedeutet dies, dass die an den Umfangsstegen eingeformten Rinnenabschnitte auf axial einander zugewandten Seiten der gegenüberliegenden Umfangsstege liegen, so dass ein Trägerring nicht auf einer Stirnseite eines so gebildeten Lagerkäfigs liegt, sondern vielmehr näher an einem Außen- oder Innenringmantel. Dadurch kann der Lagerring näher an den Wälzkörpern, beispielsweise Rollen, sitzen und wird somit formstabiler. Es werden somit häufig weniger Kippmomente erzeugt. Des Weiteren kann in axialer Richtung Platz eingespart werden, was wiederum zu insgesamt schlankeren Lagern führen kann.

Gemäß einem weiteren bevorzugten Ausführungsbeispiel kann die Kopplungsanordnung des Kunststofflagerkäfigsegments zusätzlich eine Führung zur Aufnahme eines Wellenbergs eines in radialer Richtung gewellten Trägerrings umfassen, um das Lagerkäfigsegment mittels des Wellenbergs und der dafür vorgesehenen Aufnahme auf dem gewellten Trägerring in Umfangsrichtung zu fixieren und somit eine erhöhte Stabilität und Belastbarkeit des kombinierten Metall-Kunststoff- bzw. Carbon-Kunststoff-Lagerkäfigs zu erhalten. Durch diesen gewellten Trägerring ist es möglich, die radial angebrachten Segmente genauer zu positionieren. Ein Spiel einer Käfigtasche, die durch zwei Segmente gebildet wird, kann genauer bestimmt werden.

Gemäß einem weiteren Aspekt der vorliegenden Erfindung ist auch ein Lagerkäfig für ein Wälzlager vorgesehen, der aus einer Mehrzahl von auf wenigstens einem Trägerring angeordneter Kunststofflagerkäfigsegmente gebildet ist.

Bevorzugt umfasst ein derartiger Lagerkäfig einen ersten und einen zweiten Trägerring, sowie mehrere oben erwähnte Kunststofflagerkäfigsegmente, die mittels der beschriebenen Schnappkopplungsanordnung über die beiden Trägerringe zu einem Ringkorpus zusammengefasst sind.

Weitere bevorzugte Ausführungsbeispiele und Weiterbildungen der vorliegenden Erfindung sind Gegenstand der abhängigen Ansprüche und der nachfolgenden detaillierten Beschreibung.

Mittels einer durch die Lagerkäfigsegmente und der Trägerringe aus Metall oder Carbon (Kohlenstofffaserverbund) erzielte Segmentbauweise kann ein Wärmeausdehnungskoeffizient bei erfindungsgemäß kombinierten Metall- bzw. Carbon-Kunststoff-Lagerkäfigen auf ein Minimum reduziert werden, was sich insbesondere bei mittleren bis großen Lagerdurchmessern ab ca. 300 mm positiv bemerkbar macht. Gegenüber reinen Kunststoffkäfigen kann durch den Einsatz der Trägerringe, bei denen es sich beispielsweise um Stahlringe handeln kann, eine Erhöhung der Festigkeit, insbesondere in radialer Richtung, erreicht werden. Durch die als Träger fungierenden Trägerringe ist ein erzielbarer Ringdurchmesser nach oben im Wesentlichen unbeschränkt.

Des Weiteren können die Kunststofflagerkäfigsegmente derart mit den Trägerringen gekoppelt werden, dass es in montiertem Zustand des kombinierten Lagerkäfigs zu keinem metallischen Kontakt zwischen Wälzkörper und metallischen Trägerringen kommt, wodurch ein Verschleiß durch Käfigkontakt deutlich reduziert werden kann. Auch die oben bereits beschriebenen Notlaufeigenschaften des kombinierten Metall- bzw. Carbon-Kunststoff-Lagerkäfigs können durch den Einsatz der Kunststofflagerkäfigsegmente auf vorteilhafte Weise gegenüber reinen Metallkäfigen verbessert werden.

Infolge der Elastizität der Kunststofflagerkäfigsegmente können Wälzkörper in die durch benachbarte Segmente gebildeten Taschen einschnappen, wodurch eine Haltefunktion für die Wälzkörper realisiert wird. Ein erfindungsgemäßer kombinierter Lagerkäfig kann somit völlig getrennt von dem Lager montiert werden.

Weitere Vorteile von Ausführungsbeispielen der vorliegenden Erfindung können sich durch eine zum Teil enorme Gewichtsersparnis gegenüber herkömmlichen Messing- bzw. Stahlmassivkäfigen ergeben. Diese Gewichtsersparnis wird in erster Linie durch den Einsatz der erfindungsgemäßen Kunststofflagerkäfigsegmente erzielt. Dadurch dass nicht ein ganzer Käfig, sondern lediglich die einzelnen Kunststoffkäfigsegmente hergestellt werden müssen, ist dies mit einfachen und kleinen Spritzgusswerkzeugen möglich, was wiederum eine kostengünstige Fertigung eines kombinierten Lagerkäfigs ermöglicht. Unter anderem sind ein niedriges Laufgeräusch durch gute Dämpfung, hervorragende tribologische Eigenschaft und eine ausgezeichnete Notlaufeigenschaft weitere Vorteile dieses Lagerkäfigs.

Lagerkäfige mit einer Mehrzahl von Kunststoffkäfigsegmenten, die als solche über wenigstens einen Trägerring zu einem Ringkorpus zusammengefasst sind, können prinzipiell für sämtliche Wälzlagerformen und -varianten eingesetzt werden. Ein derartiger Lagerkäfig kann außenring-, innenring- und auch laufbahngeführt konstruiert werden.

Lagerkäfige der vorgestellten Art können zum Beispiel auch bei Anwendungen eingesetzt werden, in denen Messingmaterial nicht eingesetzt werden darf, wie zum Beispiel in so genannten Sauergas-Anwendungen ("Sour Gas"-Anwendungen) oder Ammoniaktauglichen Kompressoren (Ammonia Compressors). Bei den vorgestellten Lagerkäfigen sind hinsichtlich der Trägerringe und Wälzkörper Standardkomponenten verwendbar.

Nachfolgend werden Ausführungsbeispiele der vorliegenden Erfindung bezugnehmend auf die beiliegenden Figuren näher erläutert. Es zeigen:
- Fig. 1: eine perspektivische Darstellung eines Kunststoffkäfigsegments für ein ringförmiges Wälzlager gemäß einem Ausführungsbeispiel der vorliegenden Erfindung;
- Fig. 2: eine perspektivische Darstellung verschiedener Trägerringe gemäß verschiedener Ausführungsbeispiele der vorliegenden Erfindung;
- Fig. 3: eine vergrößerte perspektivische Ausschnittsdarstellung eines Kunststoffkäfigsegments gemäß einem weiteren Ausführungsbeispiel der vorliegenden Erfindung;
- Fig. 4: eine Darstellung einer Montage eines kombinierten Metall-Kunststoff-Lagerkäfigs gemäß einem Ausführungsbeispiel der vorliegenden Erfindung;
- Fig. 5: perspektivische Darstellungen von Metall-Kunststoff-Käfigen gemäß Ausführungsbeispielen der vorliegenden Erfindung;
- Fig. 6: eine perspektivische Darstellung eines Zylinderrollenlagers mit einem kombinierten Metall-Kunststoff-Käfig gemäß einem Ausführungsbeispiel der vorliegenden Erfindung;
- Fig. 7: eine Frontansicht eines unsymmetrischen Kunststoffkäfigsegments gemäß einem Ausführungsbeispiel der vorliegenden Erfindung;
- Fig. 8: eine Frontansicht eines unsymmetrischen Kunststoffkäfigsegments für ein Kegelrollenlager gemäß einem weiteren Ausführungsbeispiel der vorliegenden Erfindung;
- Fig. 9: eine perspektivische Darstellung eines Kunststoffkäfigsegments für ein Kegelrollenlager gemäß einem weiteren Ausführungsbeispiel der vorliegenden Erfindung;
- Fig. 10: eine perspektivische Darstellung eines Kegelrollenlagers mit einem kombinierten Metall-Kunststoff-Käfig gemäß einem weiteren Ausführungsbeispiel der vorliegenden Erfindung;
- Fig. 11: eine Schnittdarstellung eines Zylinderrollenlagers mit einem Käfig mit InnenringLaufbahn-Abstützung (-Führung);
- Fig. 12: eine Schnittdarstellung eines Zylinderrollenlagers mit einem Käfig mit kombinierter Innenring Laufbahn- und Schulter-Abstützung (-Führung); und
- Fig. 13: eine Schnittdarstellung eines Kegelrollenlagers mit einem aus Käfigsegmenten gemäß Fig. 9 gebildeten Lagerkäfig.

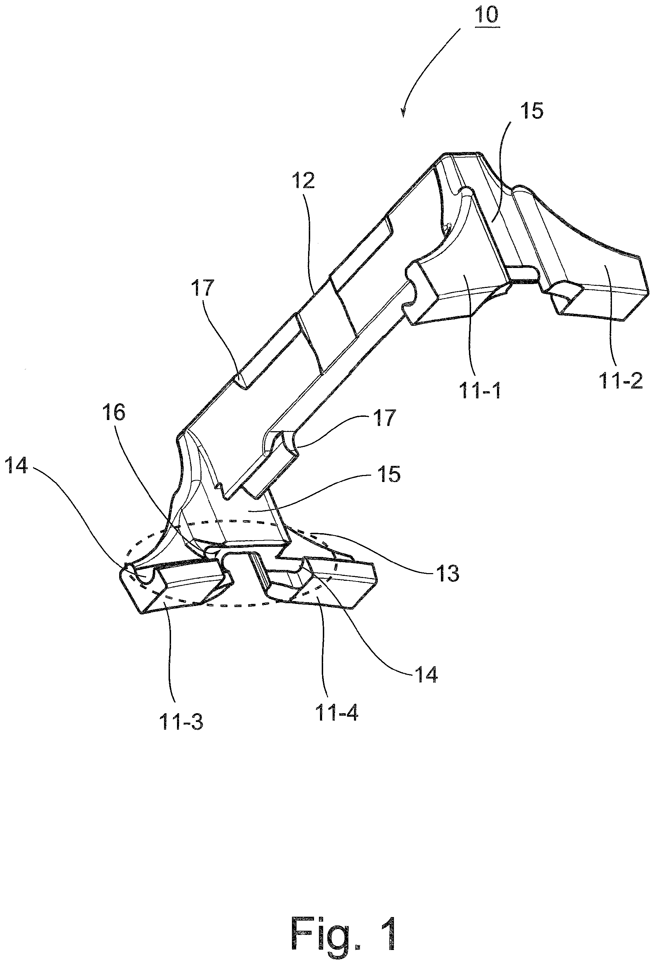

Fig. 1 zeigt in einer perspektivischen Ansicht ein Lagerkäfigsegment 10 für einen ringförmigen Wälzlagerkäfig gemäß einem Ausführungsbeispiel der vorliegenden Erfindung.

Das Lagerkäfigsegment 10 umfasst wenigstens zwei in einer Umfangsrichtung verlaufende Umfangsstege 11, die, wie hier dargestellt ist, auch jeweils zweiteilig (11-1, 11-2 und 11-3, 11-4) ausgebildet sein können. Ferner ist ein die Umfangsstege 11 verbindender Verbindungssteg 12 vorgesehen. Das Lagerkäfigsegment 10 ist aus einem Kunststoff gebildet bzw. gefertigt und umfasst eine Kopplungsanordnung 13, die ausgebildet ist, um das Lagerkäfigsegment 10 mittels einer Schnapp- oder Rastverbindung auf wenigstens einem beispielsweise metallischen Trägerring (nicht dargestellt) anzuordnen, so dass mittels zweier in der Umfangsrichtung benachbart auf dem Trägerring angeordneter Lagerkäfigsegmente 10 eine Tasche oder ein Fenster zur Aufnahme eines Wälzkörpers gebildet werden kann.

Bevorzugt ist dazu pro Lagerkäfigsegment 10 genau ein Verbindungssteg 12 vorgesehen, der in auf dem Trägerring montiertem Zustand dann in axialer Richtung, d.h. in Richtung der Lagerrotationsachse, verläuft. Der die beiden gegenüberliegenden (evtl. jeweils zweiteilig ausgebildeten) Umfangsstege 11 verbindende Steg 12 verläuft in axialer Richtung, um die beiden (zweiteiligen) Umfangsstege 11-1, 11-2 und 11-3, 11-4 in einem vordefinierten axialen Abstand, der beispielsweise von einer Rollenlänge abhängt, voneinander zu halten. Eine Wälzkörpertasche wird in diesem Fall durch zwei benachbart auf dem Trägerring angeordnete Lagerkäfigsegmente 10 gebildet, wobei die Tasche bzw. das Fenster durch die Umfangs- und Verbindungsstege 11, 12 der in Umfangsrichtung benachbarten Lagerkäfigsegmente 10 begrenzt wird, wie es im weiteren Verlauf noch deutlich werden wird. Dabei bilden bei Ausführungsbeispielen die Umfangsstege 11 in montiertem Zustand des Lagerkäfigs stirnseitig zu den Wälzkörpern angeordnete Führungsborde.

Gemäß einer bevorzugten Ausführungsform ist das Lagerkäfigsegment 10 komplett einstückig aus dem Kunststoff gefertigt, beispielsweise mittels eines Spritzgussverfahrens. Bei dem Kunststoff kann es sich, wie es eingangs bereits erwähnt wurde, beispielsweise um Polyamid 66, Polyamid 46, Polyetheretherketon (PEEK), Phenolharz oder auch einen anderen Polymerwerkstoff handeln.

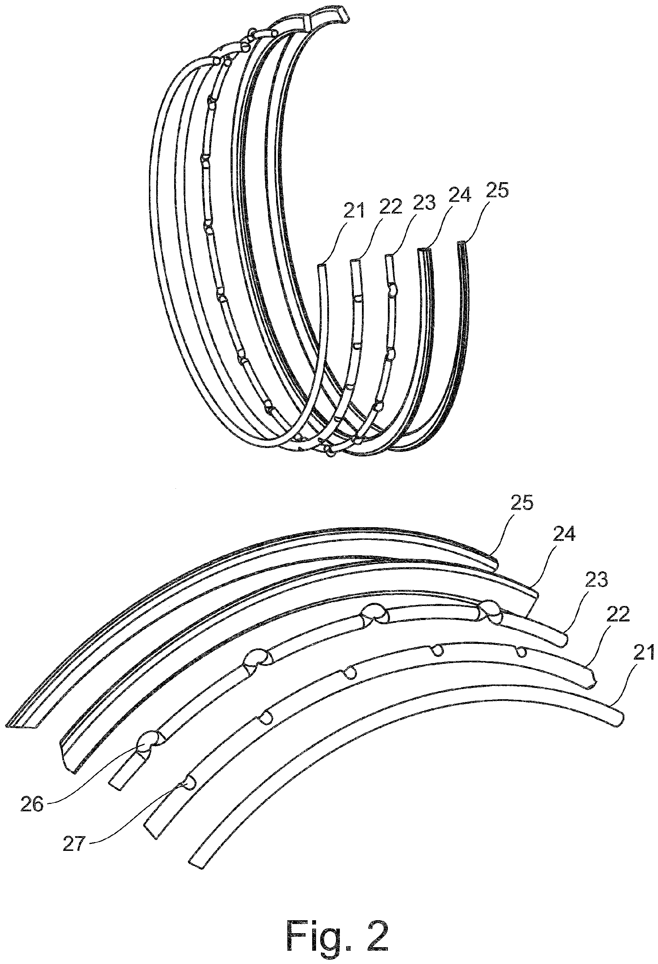

Diese beiden (zweiteiligen) Umfangsstege 11-1, 11-2 und 11-3, 11-4 können nicht nur unterhalb des verbindenden Steges 12 liegen, wie in Fig. 1 dargestellt, sondern auch oberhalb (dem Außendurchmesser zugewandten) Seite des verbindenden Steges 12 liegen. Die Kopplungsanordnung 13 umfasst gemäß Ausführungsbeispielen eine in wenigstens einen der Umfangsstege 11 eingeformte, elastische Aufnahme zum formschlüssigen Aufnehmen des wenigstens einen Trägerrings aus z.B. Metall oder Carbon. Einige mögliche Ausführungsformen von Trägerringen sind in Fig. 2 dargestellt und mit den Bezugszeichen 21 bis 25 versehen. Infolge der Elastizität der Aufnahme kann beispielsweise der Trägerring 21 darin einschnappen und somit Trägerring 21 und Kunststofflagerkäfigsegment 10 miteinander verbinden.

Das in Fig. 1 gezeigten Ausführungsbeispiel weist erfindungsgemäß dazu ein in Umfangsrichtung zweigeteilter Umfangssteg 11-3, 11-4 wenigstens einen Rinnenabschnitt 14 zum Aufnehmen des Trägerrings 21 auf. Die elastische Aufnahme weist somit gemäß einem Ausführungsbeispiel eine elastische in dem Kunststoff des Lagerkäfigsegments 10 eingeformte Rinne 14 auf, welche einen an den Trägerring 21 angepassten Querschnitt aufweist, um eine belastbare Schnappverbindung zwischen Ring und Lagerkäfigsegment 10 zu ermöglichen. Erfindungsgemäß sind an dem zweigeteilten Umfangssteg 11-3, 11-4 bzw. den Umfangsstegabschnitten 11-3 und 11-4 jeweils derartige Rinnenabschnitte 14 vorgesehen, die ausgebildet sind, um den Trägerring 21 von innen bzw. unten aufzunehmen bzw. zu umgreifen. An einem die beiden Umfangsstegabschnitte 11-3 und 11-4 verbindenden Mittelabschnitt 15 ist zur Kopplung des Lagerkäfigsegments 10 mit dem Trägerring 21 ein weiterer Rinnenabschnitt 16 vorgesehen, der den Trägerring 21, im Gegensatz zu den in Umfangsrichtung weiter außen liegenden Rinnenabschnitten 14, jedoch von außen bzw. oben umgreifen kann. Durch das Umgreifen des Trägerrings 21 sowohl von innen als auch von außen durch die entsprechenden unten und oben liegenden Rinnenabschnitte 14 bzw. 16 kann eine besonders stabile und beanspruchbare Kopplung von Kunststofflagerkäfigsegment 10 und Trägerring 21 erreicht werden.

Die elastischen Rinnenabschnitte 14 und 16 für den wenigstens einen Trägerring 21 sind in einer dem axial gegenüberliegenden Umfangssteg 11-1, 11-2 zugewandten Seite des Umfangsstegs 11-3, 11-4 eingeformt, so dass die an den Umfangsstegen 11-1, 11-2 bzw. 11-3, 11-4 eingeformten Rinnenabschnitte 14, 16 auf axial einander zugewandten Seiten der gegenüberliegenden Umfangsstege 11-1, 11-2 und 11-3, 11-4 liegen. Der Trägerring 21 aus Carbon oder Metall wird somit nicht auf einer Stirnseite des so gebildeten Lagerkäfigs gehalten, sondern vielmehr innerhalb einer durch den Abstand der axial gegenüberliegenden Umfangsstegabschnitte definierten axialen Erstreckung des so gebildeten Lagerkäfigs. Dadurch kann der Lagerring näher an den Wälzkörpern, beispielsweise Rollen, stützen und wird somit formstabiler und erzeugt weniger Kippmoment. Dadurch, dass die Schnappelemente in Form der Rinnenabschnitte 14, 16 axial nicht auftragen, kann in axialer Richtung Platz eingespart werden, was wiederum zu insgesamt schlankeren Lagern führen kann. Dies ist insbesondere vorteilhaft bei einem axial begrenzten Bauraum.

Wie es anhand der Fig. 1 deutlich zu erkennen ist, kann das Lagerkäfigsegment 10 derart symmetrisch ausgebildet sein, dass sich die gleichen Kopplungselemente 14, 16 auch an dem dem zweigeteilten Umfangssteg 11-3, 11-4 axial gegenüberliegenden Umfangssteg 11-1, 11-2 befinden. Die Kopplungsanordnung 13 des Lagerkäfigsegments 10 weist dann an bzw. in jedem der zwei axial beabstandeten Umfangsstege 11-1, 11-2 und 11-3, 11-4 die beschriebenen eingeformten, elastischen Aufnahmen 14, 16 zum formschlüssigen Aufnehmen jeweils eines zugeordneten Trägerrings auf.

Wie es weiter aus Fig. 1 zu erkennen ist, kann der Verbindungssteg 12, der gleichzeitig als Trennsteg zwischen zwei benachbarten Wälzkörpertaschen bzw. -fenstern wirkt, auch ein- bzw. angeformte Führungsabschnitte 17 aufweisen, die zur Führung von Wälzkörpern, wie beispielsweise Zylinderrollen, Tonnen oder Kegeln, dienen. Gemäß dem in Fig. 1 gezeigten Ausführungsbeispiel handelt es sich bei den Wälzkörperführungsabgeschnitten 17 um an den Verbindungssteg 12 angeformte Führungsnasen oder -lippen, die in ihrer Form an eine Wölbung einer Wälzkörpermantelfläche angepasst sind. Generell können die in Umfangsrichtung weisenden Seiten des Verbindungsstegs 12 in ihrer Form an eine Wälzkörpergeometrie angepasst sein, d.h. also beispielsweise eine Wölbung entsprechend einer Wälzkörperoberfläche aufweisen. Dies ermöglicht in montiertem Zustand eine verbesserte und stabilere Führung der Wälzkörper. Durch diese angeformten Führungsnasen oder - lippen ist es z.B. bei einem Zylinderrollenlager möglich, den Rollensatz verliersicher im Käfig zu platzieren, wodurch eine separate Montage der einzelnen Lagerteile möglich ist ohne zusätzliche Montagehilfen.

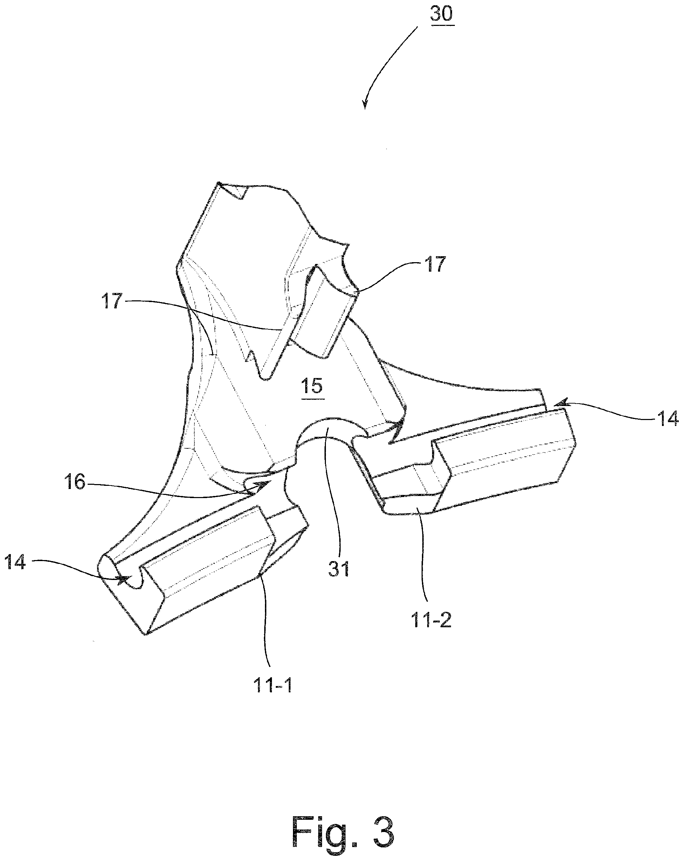

Fig. 3 zeigt eine vergrößerte perspektivische Ausschnittsdarstellung eines Kunststoffkäfigsegments 30 gemäß einem weiteren Ausführungsbeispiel der vorliegenden Erfindung.

Das in Fig. 3 gezeigte Kunststoffkäfigsegment 30 unterscheidet sich von dem Kunststoffkäfigsegment 10 dadurch, dass die Kopplungsanordnung 13 ferner eine Führung 31 zur Aufnahme eines Wellenbergs 26 eines in radialer Richtung gewellten Trägerrings 23 (siehe Fig. 2) umfasst, um das Lagerkäfigsegment 30 mittels des Wellenbergs 26 auf dem gewellten Trägerring 23 in Umfangsrichtung zu fixieren. Der die beiden Umfangsstegabschnitte 11-1 und 11-2 verbindende Mittelabschnitt 15 weist dazu gemäß Fig. 3 an seinem in radialer Richtung untenliegendem Ende eine vertikal nach oben weisende Wölbung 31 auf, um in dieser Wölbung 31 einen entsprechend gewölbten Abschnitt (Wellenberg 26) des gewölbten bzw. gewellten Trägerrings 23 aufzunehmen. Das Lagerkäfigsegment 30 kann nun derart auf dem gewellten Trägerring 23 angeordnet werden, dass die Wellenberge 26 in die dafür vorgesehenen Aufnahmen 31 greifen und somit das Kunststofflagerkäfigsegment 30 auf dem gewellten Trägerring 23 in Umfangsrichtung fixieren.

Wie es durch in Fig. 2 angedeutete Vertiefungen 27 in dem entsprechend strukturierten Metall- oder Carbonring 22 zu erkennen ist, könnte der in radialer Richtung nach außen gewölbte Abschnitt 31 gemäß einem anderen Ausführungsbeispiel auch durch einen radial nach innen gewölbten Abschnitt bzw. eine Nase ersetzt werden, die dann in die dafür vorgesehenen Vertiefungen 27 des Trägerrings 22 greifen könnte, um ein derartig konstruiertes Kunststofflagerkäfigsegment (nicht gezeigt) auf diesem Trägerring zu fixieren.

Nachdem Ausführungsbeispiele der vorliegenden Erfindung auch einen kombinierten Metall- bzw. Carbon-Kunststoff-Lagerkäfig für ein ringförmiges Wälzlager umfassen, der aus einer Mehrzahl von auf wenigstens einem Trägerring angeordneten erfindungsgemäßen Kunststofflagerkäfigsegmenten gebildet ist, soll im Nachfolgenden auch ein Verfahren bzw. eine Vorgehensweise zum Herstellen bzw. Montieren eines derartigen Lagerkäfigs erläutert werden.

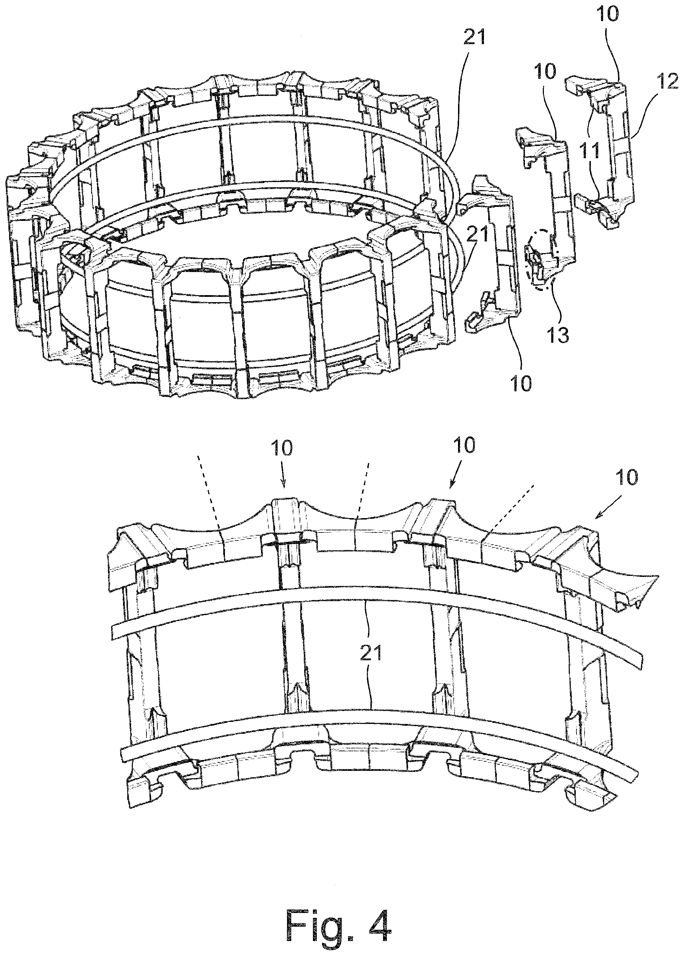

Dazu ist in Fig. 4 angedeutet, dass die Montage eines erfindungsgemäßen Metall- bzw. Carbon-Kunststoff-Lagerkäfigs zunächst ein Bereitstellen wenigstens eines Trägerrings 21 umfasst. Ferner bedarf es einer Bereitstellung einer Mehrzahl erfindungsgemäßer Kunststofflagerkäfigsegmente 10 mit jeweils zwei in einer Umfangsrichtung verlaufenden Umfangsstegen 11 und wenigstens einem die Umfangsstege verbindenden Verbindungssteg 12, wobei jedes der Lagerkäfigsegmente 10 eine Kopplungsanordnung 13 aufweist, die ausgebildet ist, um das Lagerkäfigsegment 10 mittels einer Schnappverbindung auf dem wenigstens einen Trägerring 21 anzuordnen. Schließlich werden die Lagerkäfigsegmente 10 auf dem wenigstens einen Trägerring 21 derart verschnappt, dass mittels zweier in der Umfangsrichtung benachbart auf dem Trägerring 21 angeordneter Lagerkäfigsegmente 10 wenigstens eine Tasche zur Aufnahme eines Wälzkörpers gebildet wird. Zum Verschnappen der Lagerkäfigsegmente 10 mit dem Trägerring 21 weisen die Lagerkäfigsegmente 10 an den Umfangsstegen jeweils elastische Rinnenabschnitte 14, 16 auf, wobei die Rinnenabschnitte 14, 16 in einer einem gegenüberliegenden Umfangssteg zugewandten Seite eines Umfangsstegs eingeformt sind. D.h., die Lagerkäfigsegmente 10 werden jeweils auf den Innenseiten ihrer Umfangsstege mit dem wenigstens einen Trägerring 21 verschnappt.

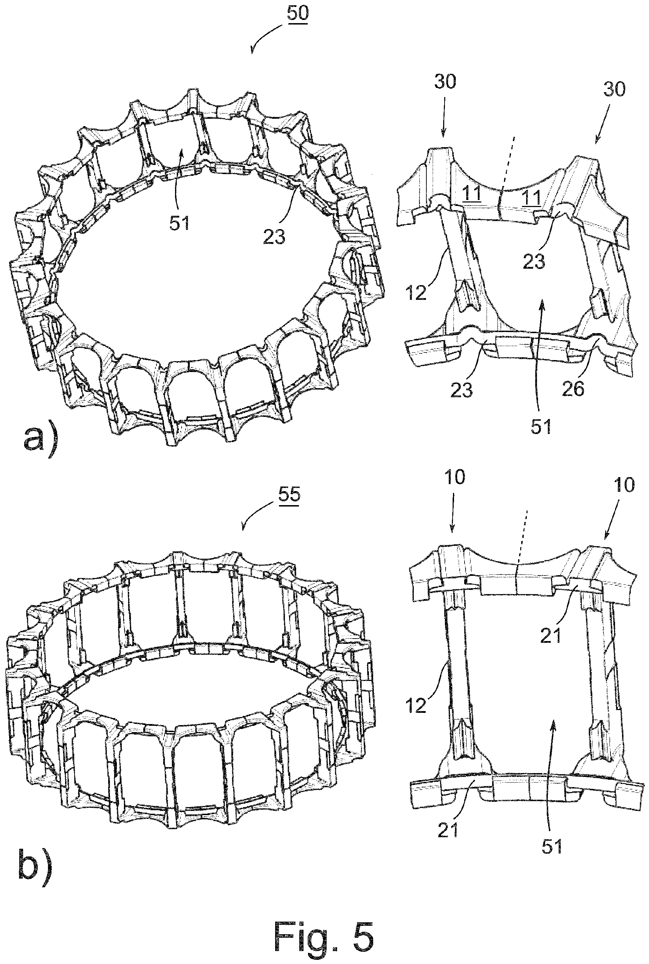

Demgemäß hergestellte bzw. montierte Metall- bzw. Carbon-Kunststoff-Lagerringe sind perspektivisch in den Fig. 5a und 5b gezeigt.

Dabei stellt Fig. 5a einen kombinierten Metall- bzw. Carbon-Kunststoff-Lagerkäfig 50 dar, der aus auf zwei gewellten Trägerringen 23 aufgeklemmten Kunststoff Lagerkäfigsegmenten 30 gebildet ist. In dieser Darstellung ist nun deutlich zu erkennen, dass eine Wälzkörpertasche 51 durch zwei in Umfangsrichtung benachbarte Lagerkäfigsegmente 30 gebildet wird. Die Verbindungsstege 12 der benachbarten Käfigsegmente 30 bilden Begrenzungen der Tasche 51 in Umfangsrichtung. Die stirnseitig an dem Lagerkäfig 50 angeordneten Umfangsstege 11 zweier benachbarter Käfigsegmente 30 bilden einen axialen bzw. stirnseitigen Bord für einen noch in die Tasche 51 einzubringenden Wälzkörper.

Entsprechend verhält es sich mit dem in Fig. 5b gezeigten montierten Lagerkäfig 55, welcher aus zwei wellenlosen Trägerringen 21 und darauf aufgeklemmter Lagerkäfigsegmente 10 gebildet ist.

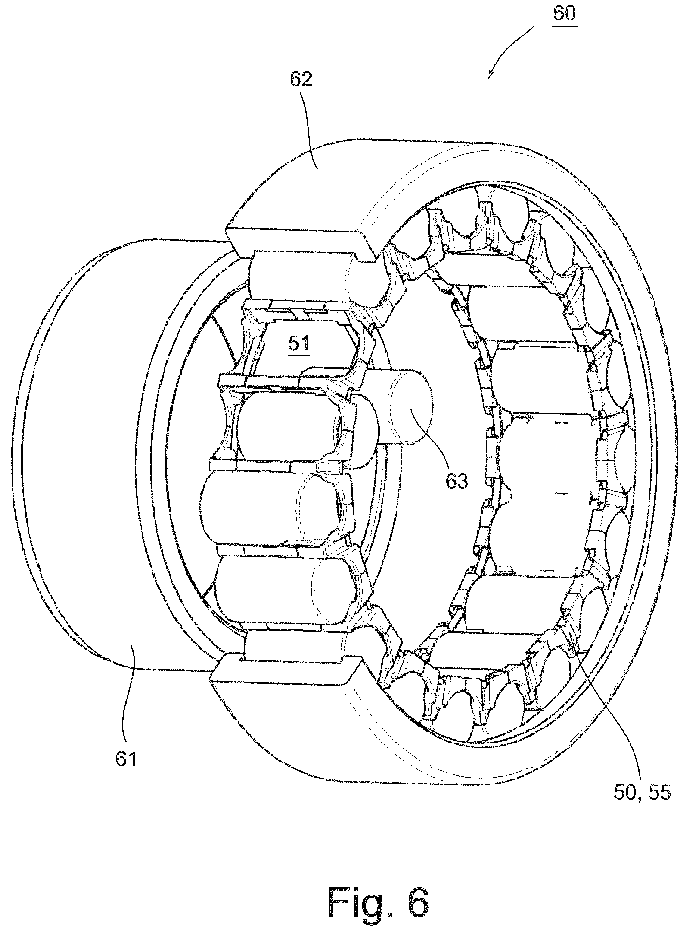

Wie ein komplettes, ringförmiges Wälzlager mit einem erfindungsgemäßen Lagerkäfig samt darin geführter Wälzkörper aussehen könnte, ist schematisch in der perspektivischen Ansicht der Fig. 6 skizziert.

Fig. 6 zeigt in perspektivischer Darstellung ein Rollenlager 60 mit einem Innenring 61 und einem Außenring 62. Zwischen den Innenring 61 und dem Außenring 62 befindet sich ein erfindungsgemäßer Lagerkäfig 50 bzw. 55 mit in dessen einzelnen Taschen geführten Wälzkörpern 63. Infolge der Elastizität der Kunststofflagerkäfigsegmente können die Wälzkörper 63 gut in die Taschen 51 einschnappen.

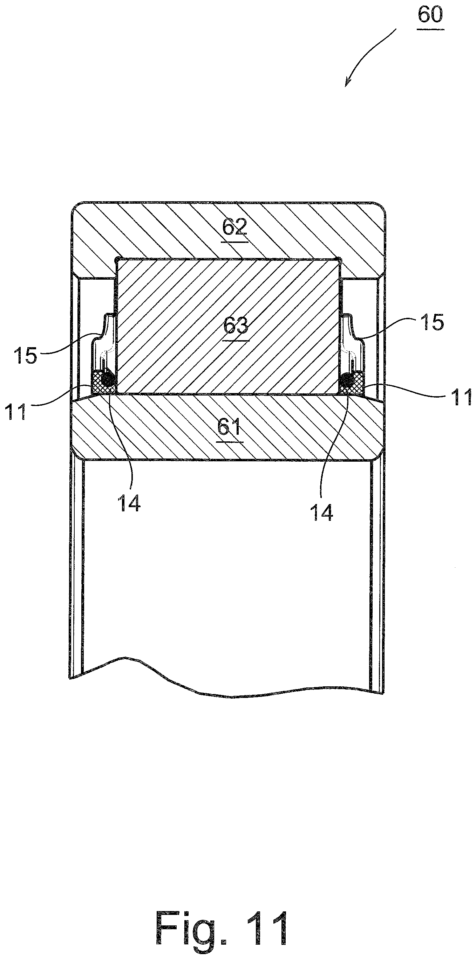

Die Fig. 11 zeigt das Lager 60 in einer schematischen Querschnittsdarstellung. Es handelt sich um ein Lager in NU-Ausführung. D.h., die Lager der Bauform NU haben zwei feste Führungsborde am Lageraußenring 62 und einen bordlosen axial verschiebbaren Lagerinnenring 61. (Sie lassen zwischen Welle und Gehäuse in beiden Richtungen Axialverschiebungen, d. h. den zwangfreien Längendehnungsausgleich, innerhalb des Lagers in bestimmten Grenzen zu.) Die links- und rechtsseitig verlaufenden Umfangsstege 11 der Kunststofflagerkäfigsegmente sind so ausgelegt, dass hier eine Führung durch die Laufbahn des Lagerinnenrings 61 sichergestellt wird. Das Risiko für Anschmierungen besonders bei kritischen Mindestlastbedingungen sowie bei schnellem Beschleunigen und Abbremsen wird hierdurch minimiert. Des Weiteren wird die Aufgabe der Führungsborde vorteilhaft von an den Mittelabschnitten 15 links- und rechtsseitig verlaufenden Umfangsstegen 11 der Kunststofflagerkäfigsegmente mit den axial innenliegenden Rinnenabschnitten 14 wahrgenommen. Dazu können die Rinnenabschnitte 14 auf ihren den Stirnseiten der Zylinderrollen 63 zugewandten Seiten geometrisch entsprechend ausgebildet sein, um die die Zylinderrollen 63 bzw. deren Stirnseiten auf dem Lagerinnenring 61 gut führen zu können. Des Weiteren lässt sich aus Fig. 11 gut erkennen, dass die von den axial innenliegend angeordneten Rinnenabschnitten 14 zwischen den Wälzkörpern 63 und den Umfangsstegen 11 gehaltenen Trägerringe nach der Montage der Wälzkörper 63 in vorteilhafter Weise verliersicher in der Lageranordnung 60 gehalten werden. Die Trägerringe sind in montiertem Zustand durch die Schnappverbindung sozusagen verliersicher zwischen den Wälzkörpern 63 und den links- und rechtsseitig verlaufenden Umfangsstegen 11 der Kunststofflagerkäfigsegmente "gefangen", wodurch ein Auseinanderfallen des kombinierten Metall-Kunststoff- oder Carbon-Kunststoff-Lagerkäfigs verhindert werden kann.

Das erfindungsgemäße Lagerkäfigkonzept lässt sich besonders bevorzugt für Lager bzw. Lagerkäfige mit einem Durchmesser ab 300 mm einsetzen, da Kunststoffmassivkäfige, wie es eingangs bereits beschrieben wurde, in dieser Größenordnung nur relativ schwer realisierbar sind. Somit umfassen Ausführungsbeispiele kombinierte Metall- bzw. Carbon-Kunststofflagerkäfige mit einem Durchmesser von 300 mm und darüber, insbesondere von 350 mm und darüber.

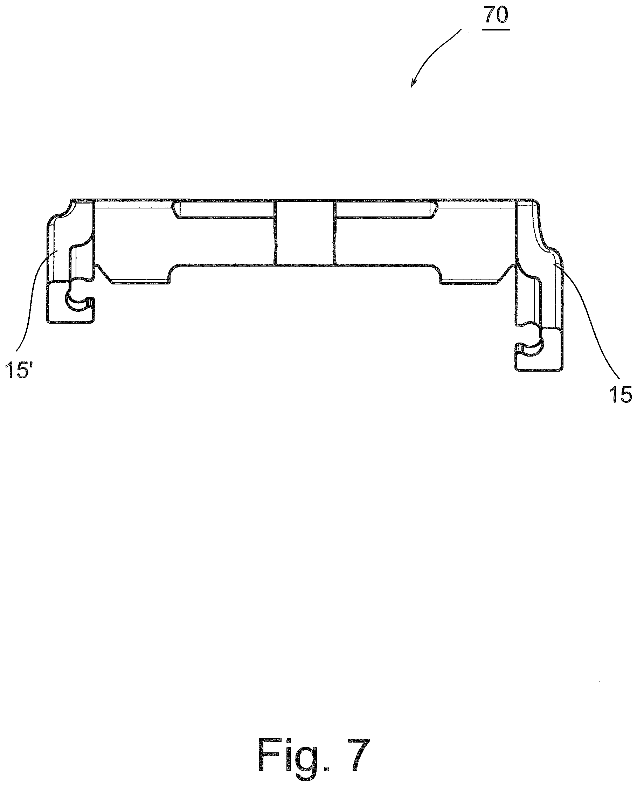

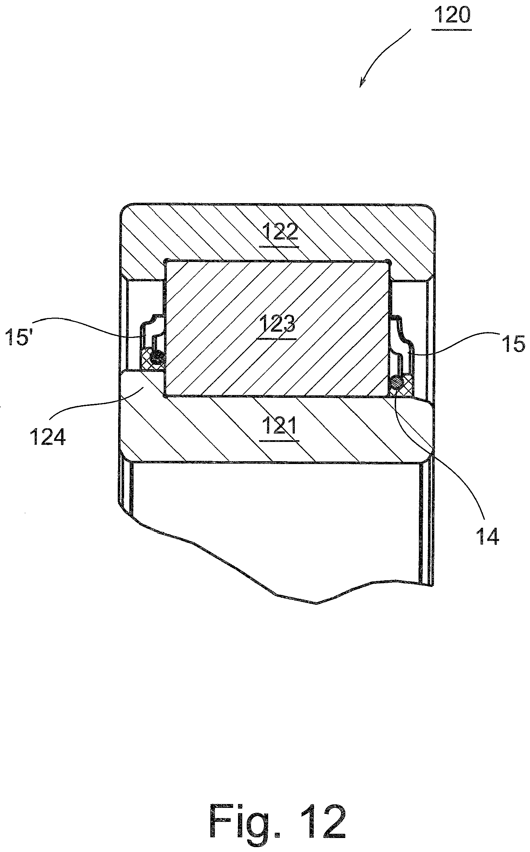

Im Nachfolgenden werden beispielhaft noch einige weitere Ausführungsbeispiele für Kunststofflagerkäfigsegmente gemäß der vorliegenden Erfindung erläutert. Dazu zeigt Fig. 7 zeigt in einer Frontansicht ein weiteres Ausführungsbeispiel eines unsymmetrisch gestalteten Kunststofflagerkäfigsegments 70 (für ein Innenring-Schulter und Laufbahn geführtes Zylinderrollenlager wie in Fig. 12 dargestellt).

Wie sich anhand von Fig. 7 erkennen lässt, hat dieses Ausführungsbeispiel, im Gegensatz zu den vorher beschriebenen Kunststofflagerkäfigsegmentvarianten, keinen im Wesentlichen U-förmigen-Querschnitt. Stattdessen ist ein in radialer Richtung von einem Ende des Verbindungsstegs 12 zu einem der Umfangsstege 11 verlaufender Schenkel bzw. Mittelabschnitt 15' kürzer ausgebildet als der axial gegenüberliegende Schenkel bzw. Mittelabschnitt 15. Ein derartiges Kunststofflagerkäfigsegment könnte beispielsweise dann in vorteilhafter Weise eingesetzt werden, wenn das Lagerkäfigsegment 70 bzw. eine Mehrzahl dieser Lagerkäfigsegmente auf unterschiedlich großen Trägerringen montiert werden soll. Wie dies in der nachfolgenden Querschnittsdarstellung Fig. 12 eines Zylinderrollenlagers in NJ-Ausführung gezeigt wird. (Dabei meint "unterschiedlich groß" Trägerringe mit unterschiedlich großen Durchmessern. Wie es bereits beschrieben wurde, werden Lagerkäfigsegmente gemäß Ausführungsbeispielen der vorliegenden Erfindung bevorzugt derart dimensioniert, dass sie auf Trägerringen aus Metall bzw. Carbon mit Durchmessern ab 300 mm zu einem kombinierten Metall- bzw. Carbon-Kunststoff-Lagerkäfig montiert werden können.)

Fig. 12 zeigt in einer Querschnittsdarstellung ein Lager 120 in NJ-Ausführung mit einem Lagerkäfig, der aus auf unterschiedlich große Trägerringe montierten Kunststofflagerkäfigsegmenten 70 gebildet wird. Die Lager der Bauform NJ haben zwei feste Borde am Außenring und einen festen Bord am Innenring, der die Welle in einer Richtung axial führen kann. Das Lager 120 weist einen Innenring 121 auf, auf dem Zylinderrollen 123 abrollen können, und der dazu an einem axialen Ende einen Haltebord 124 aufweist. An einem gegenüberliegenden axialen Ende weist der Innenring 121 dagegen keinen Führungs- bzw. Haltebord auf. Vorteilhaft wird hier von an dem längeren Mittelabschnitt 15 verlaufenden Umfangsstegen 11 der Kunststofflagerkäfigsegmente 70 mit den axial innenliegenden Rinnenabschnitten 14 eine Führung der Rollen 123 wahrgenommen. Unter anderem wird auch hier durch die beiden unterschiedlichen verlaufenden Umfangsstege 11 der Kunststofflagerkäfigsegmente 70 eine Führung durch die Laufbahn und einem festen Bord des Lagerinnenrings 61 sichergestellt.

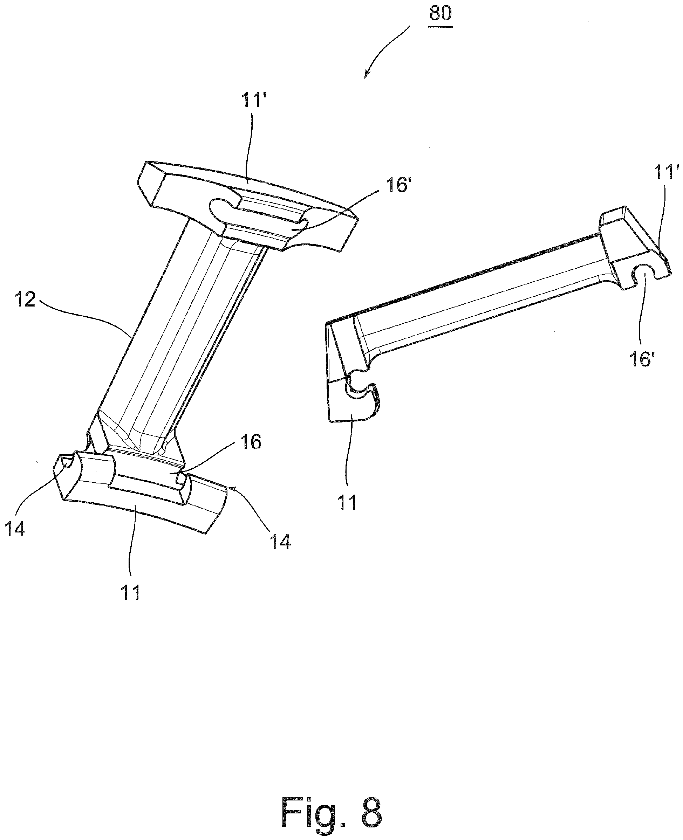

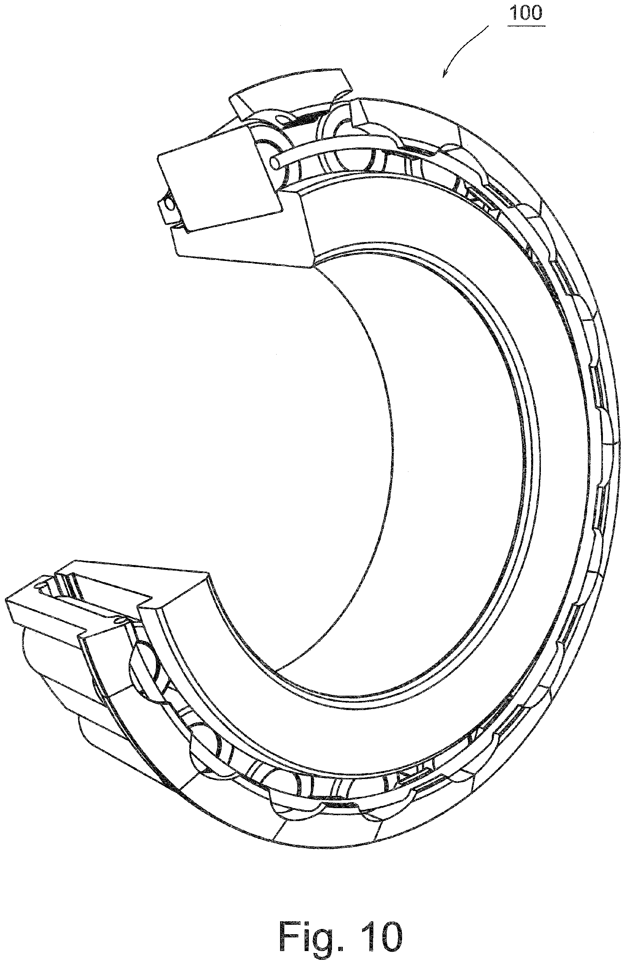

Ein ähnliches Ausführungsbeispiel ist in Fig. 8 skizziert, bei dem die gegenüberliegenden Umfangsstege 11 und 11' unterschiedlich, d.h. nicht symmetrisch zueinander, ausgebildet sind. Dieses Ausführungsbeispiel wird vorzugsweise für ein Kegelrollenlager gemäß Fig. 10 verwendet.

Während die Kopplungsanordnung auf der einen Seite (links) sowohl Rinnenabschnitte 14 aufweist, welche einen Trägerring untergreifen können, als auch Rinnenabschnitte 16, die den Trägerring übergreifen können, sind auf der axial gegenüberliegenden Seite (rechts) keine den Trägerring untergreifenden Rinnenabschnitte 14 vorgesehen. Stattdessen ist ein ausgeprägter, den Trägerring im halben Umfang übergreifender Rinnenabschnitt 16' vorgesehen. Derartige Käfigsegmente 80 können beispielsweise vorteilhaft sein, um eine leichtere Zugänglichkeit zu den damit geführten Wälzkörpern zu ermöglichen. Wartungsarbeiten an montierten erfindungsgemäßen Wälzlagern können somit erleichtert werden, da der Zugang zu den Wälzkörpern insbesondere von der (rechten) Seite ohne den Trägerring untergreifende Rinnenabschnitte stark erleichtert wird. Ein montiertes Käfigsegment 80 kann auf diese Weise praktisch einfach hochgeklappt werden.

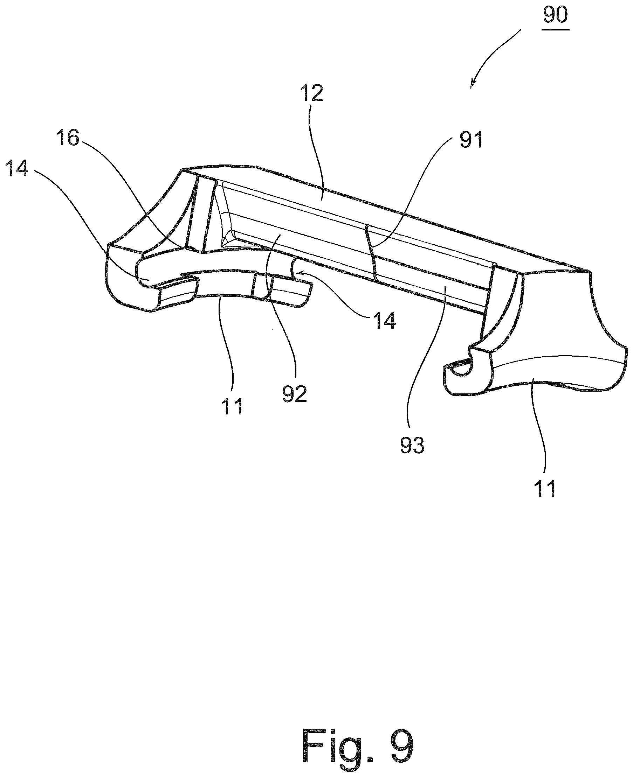

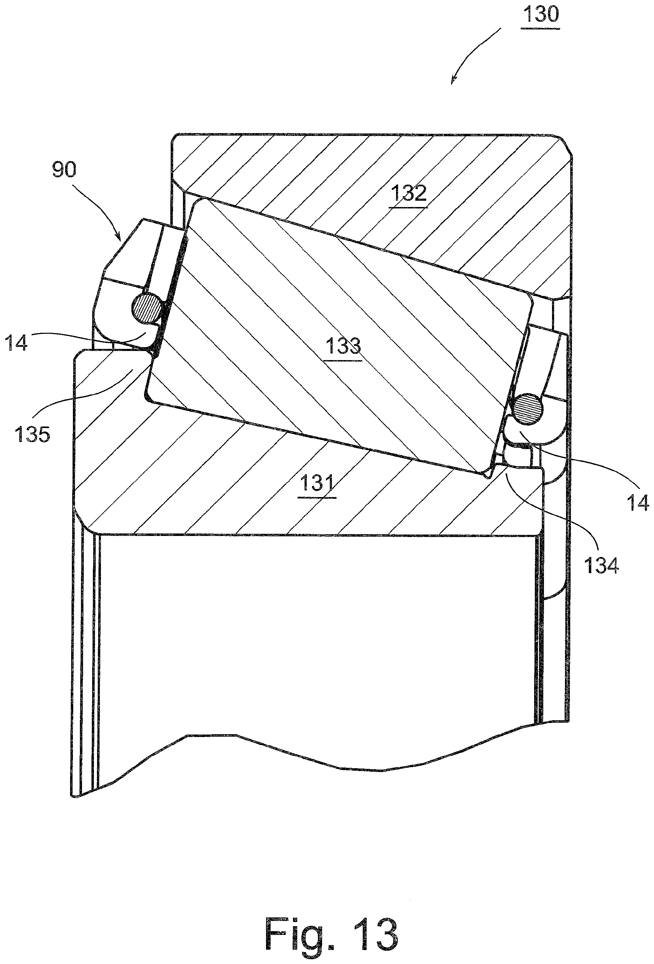

Ein weiteres mögliches Ausführungsbeispiel für ein Lagerkäfigsegment gemäß der vorliegenden Erfindung ist in Fig. 9 gezeigt. Dieses Ausführungsbeispiel kann vorzugsweise für ein Kegelrollenlager gemäß Fig. 13 verwendet werden.

Das hier dargestellte Lagerkäfigsegment 90 weist eine kompaktere Bauform auf als die anhand der Fig. 1 bis 7 beschriebenen Ausführungsformen. Die gegenüberliegenden Umfangsstege 11 sind hier jeweils einteilig statt zweiteilig ausgeführt. Der die gegenüberliegenden Umfangsstege 11 verbindende Verbindungssteg 12 weist bei dieser Ausführungsform einen im Wesentlichen V-förmigen Querschnitt auf, d.h., die in Umfangsrichtung weisenden Seiten des Verbindungsstegs 12 sind angeschrägt und zusätzlich eventuell noch gewölbt, so dass sie daran vorbeilaufende Wälzkörperoberflächen, wie z. B. Zylinder- oder Kegelmantelflächen, beim Abwälzen führen können. Wie es durch das Bezugszeichen 91 angedeutet ist kann der Verbindungssteg 12 zusätzlich noch einen "Knick" aufweisen für eine Montage von Wälzkörpern.

Bei einer Montage von Kegelrollenlagern besteht ein Problem bei einer Verbindung von Käfig, Kegelrollen und innerem Laufring. Um den Käfig, die Kegelrollen und den inneren Laufring eines Kegelrollenlagers zu verbinden, muss der Käfig bei der Montage typischerweise elastisch verformt werden. Er muss ausgeweitet produziert oder zunächst derart ausgeweitet werden, dass es möglich ist, den Käfig samt Rollen über einen Haltebord des Innenrings aufzuschieben, so dass die Rollen an der Laufbahn anliegen (siehe Fig. 13). Anschließend muss der Käfig wieder eingeholt werden, d.h. er wird mit einem Spezialwerkzeug wiederum derart plastisch verformt, dass ein Auseinanderfallen der Einheit, bestehend aus Lagerinnenring, Kegelrollen und Käfig, nicht erfolgen kann. Insbesondere bei Lagern mit großen Durchmessern sind besagte Spezialwerkzeuge zu aufwändig bzw. zu teuer.

Der Knick 91 in dem Verbindungssteg 12 des Lagerkäfigsegments 90 markiert einen Übergang von einem ersten Bereich 92 des Verbindungsstegs 12, der einer kegeligen Kontur einer zu führenden Kegelrolle angepasst ist, zu einem zweiten, gegenüber der kegeligen Kontur verbreitert ausgebildeten Bereich 93. D.h. von dem ersten Bereich 92 kann aufgrund seiner an eine Geometrie einer Kegelrolle angepassten Kontur die Kegelrolle im Betrieb geführt werden, während in dem zweiten Bereich 93 in Spalt zwischen Kegelrollenmantelfläche und Verbindungssteg 12 verbleibt. Der erste Bereich 92 weist also eine Schräge entsprechend der Schräge der Kegelrollenmantelfläche auf, wohingegen der zweite Bereich 93 beispielsweise weniger schräg ausgebildet ist, so dass sich hier in montiertem Zustand ein sich öffnender Spalt zwischen Kegelmantelfläche und dem zweiten Bereich 93 des Stegs 12 ergibt. Bei der Montage kann die Kegelrolle aufgrund des verbreitert ausgebildeten Bereichs 93 jedoch an dem Knick 91 verkippt werden. Eine aus zwei benachbart angeordneten Käfigsegmenten 90 gebildete Wälzkörpertasche weist somit einen der kegeligen Kontur der Kegelrolle angepassten ersten Bereich und einen gegenüber der kegeligen Kontur der Kegelrolle verbreiteten Bereich auf, wobei der erste Bereich ein Bereich des größeren Rollendurchmessers und der zweite Bereich ein Bereich des kleineren Rollendurchmessers ist. Der zweite Bereich erstreckt sich dabei über eine Länge, die 25 % bis 65 %, vorzugsweise 35 % bis 50 % der Länge der gebildeten Taschen entspricht. Der Übergang 91 von dem ersten Bereich 92 zum zweiten Bereich 93 kann sowohl gerundet als auch geknickt ausgeführt sein und stellt einen Kippbereich dar, an dem die Kegelrolle bei der Montage aus ihrer Rotationsachse verkippt werden kann, um über den Haltbord geführt zu werden.

Fig. 13 zeigt dazu einen Schnitt durch ein Kegelrollenlager 130, wobei eine Kegelrolle 133 in einer entsprechend ausgebildeten Laufbahn eines Innenrings 131 des Lagers 130 anläuft. Die einzelnen Kegelrollen 133 werden durch einen aus den Lagerkäfigsegmenten 90 gebildeten Lagerkäfig geführt. Um einen in sich stabileren Verbund von Innenring 131, Kegelrolle 133 und Käfig herzustellen, weist der Innenring 131 einen Haltebord 134 und einen Anlaufbord 135 auf, die eine axiale Festlegung der Rolle 133 bewerkstelligen. Bei der Montage muss jedoch die Rolle 133 mit ihrem engsten Durchmesser den Haltebord 134 überwinden. Dies erfolgt konventionell durch eine plastische Verformung des Lagerkäfigs. Gemäß Ausführungsbeispielen ist die dies jedoch nicht nötig, da eine aus zwei benachbarten Käfigsegmenten 90 gebildete Käfigtasche eine Geometrie aufweist, die ein Verkippen der Kegelrolle 133 ermöglicht, so dass sie mit ihrem engsten Durchmesser den Haltebord 134 überwinden kann. Die Form der Stege 12 bzw. der daraus resultierenden Käfigtasche für die einzelnen Kegelrollen 133 ist so ausgeführt, dass bei der Montage des Lagers die Kegelrolle 133 um einen geringfügigen Winkel, nämlich einen Kippwinkel zum Einschnappen der Rolle 133 über den Bord 134 hinaus, geschwenkt werden kann. Mit dem Lagerkäfigsegment 90 bzw. der speziell geformten Verbindungsstege 12 kann also erreicht werden, dass eine Montage der Kegelrollen 133 beim Zusammenbau von Lagerinnenring 131, Käfig und Kegelrollen 133 ohne plastische Verformung des Käfigs stattfinden kann.

Ein Wälzlager 100, in dem ein die Kunststofflagerkäfigsegmente 80 aufweisender Lagerkäfig verbaut ist, ist perspektivisch in Fig. 10 gezeigt. Bei dieser Bauform wird eine andere Möglichkeit der Montage des Rollensatzes dargestellt. Der Lageraußenring ist in dieser Darstellung nicht mit abgebildet, dient aber nach dem Zusammenstecken aller Lagerteile als Sicherung, damit die hier radial eingeklipste Seite des Kunststoffsegments ihre Position bei Belastung nicht verliert.

Bei Ausführungsbeispielen der vorliegenden Erfindung wird wenigstens ein Trägerring, bevorzugt aber zwei Trägerringe, durch Einklipsen bzw. Verschnappen vorzugsweise von innen (oder außen) formschlüssig in den vorpositionierten Kunststoffsegmenten gehalten, bzw. umgekehrt. Dadurch werden die einzelnen Kunststofflagerkäfigsegmente zueinander formstabil. Die Trägerringe können dabei geschlossene metallische Ringe, wie z. B. Stahlringe oder insbesondere verschweißte Federstahlringe, oder Carbon-Ringe sein. Sollte es zu einem "Aufweichen" der Metall- bzw. Carbon-Kunststoff-Kopplungsstellen kommen, kann ein erfindungsgemäßer kombinierter Metall- bzw. Carbon-Kunststoff-Lagerkäfig trotzdem nicht auseinanderfallen, da bei einem montierten Lager der Rollensatz ein Herausfallen der Trägerringe verhindert. Durch das vorgeschlagene Konzept wird es möglich, laufbahn- oder schultergeführte Metall- bzw. Carbon-Kunststoff-Lagerkäfige bereitzustellen.

### Bezugszeichenliste

- 10: Ausführung eines Kunststofflagerkäfigsegments
- 11: Umfangssteg
- 12: Verbindungssteg
- 13: Kopplungsanordnung
- 14: unterer Rinnenabschnitt
- 15: Mittelabschnitt
- 16: oberer Rinnenabschnitt
- 17: Wälzkörperführung
- 21: möglicher Trägerring
- 22: möglicher Trägerring mit Vertiefungen
- 23: möglicher Trägerring mit Ausbeulungen
- 24: möglicher Trägerring
- 25: möglicher Trägerring
- 26: Ausbeulung, Wellenberg
- 27: Vertiefung
- 30: Ausführung eines Kunststofflagerkäfigsegments
- 31: Eingriff für Wellenberg
- 50: kombinierter Lagerkäfig
- 51: Tasche für Wälzkörper
- 55: kombinierter Lagerkäfig
- 60: Wälzlager
- 61: Innenring
- 62: Außenring
- 63: Wälzkörper
- 70: Ausführung eines Kunststofflagerkäfigsegments
- 80: Ausführung eines Kunststofflagerkäfigsegments
- 90: Ausführung eines Kunststofflagerkäfigsegments
- 91: Übergangsbereich
- 92: erster Stegbereich
- 93: zweiter Stegbereich
- 100: Wälzlager
- 120: Lager in NJ-Ausführung
- 121: Lagerinnenring
- 122: Lageraußenring
- 123: Zylinderrolle
- 124: Haltebord
- 130: Kegelrollenlager
- 131: Lagerinnenring
- 132: Lageraußenring
- 133: Zylinderrolle
- 134: Haltebord
- 135: Haltebord

## Patentansprüche

1. Ein Lagerkäfigsegment (10; 30; 70; 80; 90) für einen Wälzlagerkäfig (50; 55) mit zwei in einer Umfangsrichtung verlaufenden Umfangsstegen (11) und einem die Umfangsstege verbindenden Verbindungssteg (12), wobei das Lagerkäfigsegment aus einem Kunststoff gebildet ist und eine Kopplungsanordnung (13) aufweist, die ausgebildet ist, um das Lagerkäfigsegment (10; 30; 70; 80; 90) mittels einer Schnappverbindung auf wenigstens einem Trägerring (21; 22; 23; 24; 25) anzuordnen, so dass mittels zweier in der Umfangsrichtung benachbart auf dem Trägerring (21; 22; 23; 24; 25) angeordneter Lagerkäfigsegmente (10; 30; 70; 80; 90) eine Tasche zur Aufnahme eines Wälzkörpers (63) gebildet werden kann, wobei die Kopplungsanordnung (13) eine in wenigstens einen der Umfangsstege (11) eingeformte, elastische Aufnahme (14; 16) zum formschlüssigen Aufnehmen des wenigstens einen Trägerrings (21; 22; 23; 24; 25) umfasst, wobei die elastische Aufnahme einen Rinnenabschnitt (14; 16) für die Schnappverbindung mit dem wenigstens einen Trägerring (21; 22; 23; 24; 25) aufweist, wobei der Rinnenabschnitt in einer einem zweiten Umfangssteg zugewandten Seite eines ersten Umfangsstegs eingeformt ist, wobei der Rinnenabschnitt erste Bereiche (14) aufweist, die ausgebildet sind, um den Trägerring von radial innen zu umgreifen, und in Umfangsrichtung zwischen den ersten Bereichen einen zweiten Bereich (16) aufweist, der ausgebildet ist, um den Trägerring von radial außen zu umgreifen.

2. Das Lagerkäfigsegment (10; 30; 70; 80; 90) nach Anspruch 1, wobei der die zwei Umfangsstege (11) verbindende Verbindungssteg (12) in axialer Richtung verläuft, um die zwei Umfangsstege (11) in einem vordefinierten axialen Abstand voneinander zu halten und, und wobei die Kopplungsanordnung (13) in jedem der zwei axial beabstandeten Umfangsstege (11) eingeformte elastische Aufnahmen (14; 16) zum formschlüssigen Aufnehmen jeweils eines Trägerrings (21; 22; 23; 24; 25) aufweist.

3. Das Lagerkäfigsegment (10; 30; 70; 80; 90) nach einem der vorhergehenden Ansprüche, wobei die elastische Aufnahme eine elastische in den Kunststoff des Lagerkäfigsegments eingeformte Rinne umfasst, die einen an den Trägerring angepassten Querschnitt aufweist.

4. Das Lagerkäfigsegment (10; 30; 70; 80; 90) nach einem der vorhergehenden Ansprüche, wobei die Kopplungsanordnung (13) ferner eine Führung (31) zur Aufnahme eines Wellenbergs (26) eines in radialer Richtung gewellten Trägerrings (23) umfasst, um das Lagerkäfigsegment mittels des Wellenbergs auf dem gewellten Trägerring in Umfangsrichtung zu fixieren.

5. Das Lagerkäfigsegment (10; 30; 70; 80; 90) nach einem der vorhergehenden Ansprüche, wobei das Lagerkäfigsegment einstückig aus dem Kunststoff gebildet ist.

6. Ein Lagerkäfig (50; 55) für ein Wälzlager (60; 100), der aus einer Mehrzahl von auf wenigstens einem Trägerring (21; 22; 23; 24; 25) angeordneten Lagerkäfigsegmenten (10; 30; 70; 80; 90) gemäß einem der vorhergehenden Ansprüche gebildet ist.

7. Der Lagerkäfig nach Anspruch 6, wobei jedes der Mehrzahl der Lagerkäfigsegmente (10; 30; 70; 80; 90) jeweils in beiden Umfangsstegen eine elastische Aufnahme (14; 16) zum formschlüssigen Aufnehmen eines Trägerrings (21; 22; 23; 24; 25) aufweist, wobei eine elastische Aufnahme (14; 16) in einer einem zweiten Umfangssteg zugewandten Seite eines ersten Umfangsstegs eingeformt ist, und wobei die Lagerkäfigsegmente (10; 30; 70; 80; 90) in Umfangsrichtung von zwei in den Aufnahmen der Umfangsstege gehaltenen Trägerringen gehalten werden.

8. Ein Verfahren zum Herstellen eines Lagerkäfigs (50; 55) für ein Wälzlager (60; 100), mit folgenden Schritten:
Bereitstellen wenigstens eines Trägerrings (21; 22; 23; 24; 25);
Bereitstellen einer Mehrzahl von Lagerkäfigsegmenten (10; 30; 70; 80; 90) aus Kunststoff mit jeweils zwei in einer Umfangsrichtung verlaufenden Umfangsstegen (11) und wenigstens einem die Umfangsstege (11) verbindenden Verbindungssteg (12), wobei jedes der Lagerkäfigsegmente (10; 30; 70; 80; 90) eine Kopplungsanordnung (13) aufweist, die ausgebildet ist, um das Lagerkäfigsegment (10; 30; 70; 80; 90) mittels einer Schnappverbindung auf dem wenigstens einen Trägerring (21; 22; 23; 24; 25) anzuordnen, wobei die Kopplungsanordnung (13) eine in wenigstens einen der Umfangsstege (11) eingeformte, elastische Aufnahme (14; 16) zum formschlüssigen Aufnehmen des wenigstens einen Trägerrings (21; 22; 23; 24; 25) umfasst, wobei die elastische Aufnahme einen Rinnenabschnitt (14; 16) für die Schnappverbindung mit dem wenigstens einen Trägerring (21; 22; 23; 24; 25) aufweist, wobei der Rinnenabschnitt in einer einem zweiten Umfangssteg zugewandten Seite eines ersten Umfangsstegs eingeformt ist, wobei der Rinnenabschnitt erste Bereiche (14) aufweist, die ausgebildet sind, um den Trägerring von radial innen zu umgreifen, und in Umfangsrichtung zwischen den ersten Bereichen einen zweiten Bereich (16) aufweist, der ausgebildet ist, um den Trägerring von radial außen zu umgreifen; und
Anordnen der Mehrzahl der Lagerkäfigsegmente (10; 30; 70; 80; 90) auf dem wenigstens einen metallischen Trägerring (21; 22; 23; 24; 25), so dass mittels zweier in der Umfangsrichtung benachbart auf dem Trägerring angeordneter Lagerkäfigsegmente (10; 30; 70; 80; 90) eine Tasche (51) zur Aufnahme eines Wälzkörpers (63) gebildet wird.

## Claims

1. Bearing cage segment (10; 30; 70; 80; 90) for an anti-friction bearing cage (50; 55) having two circumferential webs (11) which run in a circumferential direction and a connecting web (12) which connects the circumferential webs, the bearing cage segment being formed from a plastic and having a coupling arrangement (13) which is configured to arrange the bearing cage segment (10; 30; 70; 80; 90) on at least one carrier ring (21; 22; 23; 24; 25) by means of a snap-action connection, with the result that a pocket for receiving a rolling body (63) can be formed by means of two bearing cage segments (10; 30; 70; 80; 90) which are arranged on the carrier ring (21; 22; 23; 24; 25) adjacently in the circumferential direction, the coupling arrangement (13) comprising an elastic receptacle (14; 16) which is formed into at least one of the circumferential webs (11) for receiving the at least one carrier ring (21; 22; 23; 24; 25) in a positively locking manner, the elastic receptacle having a groove section (14; 16) for the snap-action connection to the at least one carrier ring (21; 22; 23; 24; 25), the groove section being formed in a side of a first circumferential web, which side faces a second circumferential web, the groove section having first regions (14) which are configured to engage around the carrier ring from the radial inside, and having a second region (16) in the circumferential direction between the first regions, which second region (16) is configured to engage around the carrier ring from the radial outside.

2. Bearing cage segment (10; 30; 70; 80; 90) according to Claim 1, the connecting web (12) which connects the two circumferential webs (11) running in the axial direction, in order to hold the two circumferential webs (11) at a predefined axial spacing from one another, and the coupling arrangement (13) having elastic receptacles (14; 16) which are formed in each of the two axially spaced apart circumferential webs (11) for receiving in each case one carrier ring (21; 22; 23; 24; 25) in a positively locking manner.

3. Bearing cage segment (10; 30; 70; 80; 90) according to either of the preceding claims, the elastic receptacle comprising an elastic groove which is formed into the plastic of the bearing cage segment and has a cross section which is adapted to the carrier ring.

4. Bearing cage segment (10; 30; 70; 80; 90) according to one of the preceding claims, the coupling arrangement (13) comprising, furthermore, a guide (31) for receiving a corrugation peak (26) of a carrier ring (23) which is corrugated in the radial direction, in order to fix the bearing cage segment on the corrugated carrier ring in the circumferential direction by means of the corrugation peak.

5. Bearing cage segment (10; 30; 70; 80; 90) according to one of the preceding claims, the bearing cage segment being formed in one piece from the plastic.

6. Bearing cage (50; 55) for an anti-friction bearing (60; 100), which bearing cage (50; 55) is formed from a plurality of bearing cage segments (10; 30; 70; 80; 90) according to one of the preceding claims which are arranged on at least one carrier ring (21; 22; 23; 24; 25) .

7. Bearing cage according to Claim 6, each of the plurality of bearing cage segments (10; 30; 70; 80; 90) having, in each case in the two circumferential webs, an elastic receptacle (14; 16) for receiving a carrier ring (21; 22; 23; 24; 25) in a positively locking manner, an elastic receptacle (14; 16) being formed in a side of a first circumferential web, which side faces a second circumferential web, and the bearing cage segments (10; 30; 70; 80; 90) being held in the circumferential direction by two carrier rings which are held in the receptacles of the circumferential webs.

8. Method for producing a bearing cage (50; 55) for an anti-friction bearing (60; 100), having the following steps:
providing of at least one carrier ring (21; 22; 23; 24; 25) ;
providing of a plurality of bearing cage segments (10; 30; 70; 80; 90) made from plastic with in each case two circumferential webs (11) which run in the circumferential direction and at least one connecting web (12) which connects the circumferential webs (11), each of the bearing cage segments (10; 30; 70; 80; 90) having a coupling arrangement (13) which is configured to arrange the bearing cage segment (10; 30; 70; 80; 90) on the at least one carrier ring (21; 22; 23; 24; 25) by means of a snap-action connection, the coupling arrangement (13) comprising an elastic receptacle (14; 16) which is formed into at least one of the circumferential webs (11) for receiving the at least one carrier ring (21; 22; 23; 24; 25) in a positively locking manner, the elastic receptacle having a groove section (14; 16) for the snap-action connection to the at least one carrier ring (21; 22; 23; 24; 25), the groove section being formed in a side of a first circumferential web, which side faces a second circumferential web, the groove section having first regions (14) which are configured to engage around the carrier ring from the radial inside, and having a second region (16) in the circumferential direction between the first regions, which second region (16) is configured to engage around the carrier ring from the radial outside; and
arranging of the plurality of bearing cage segments (10; 30; 70; 80; 90) on the at least one metallic carrier ring (21; 22; 23; 24; 25), with the result that a pocket (51) for receiving a rolling body (63) is formed by means of two bearing cage segments (10; 30; 70; 80; 90) which are arranged on the carrier ring adjacently in the circumferential direction.

## Revendications

1. Segment de cage de palier (10; 30; 70; 80; 90) pour une cage de palier à roulement (50; 55) avec deux nervures périphériques (11) s'étendant dans une direction périphérique et une nervure de liaison (12) reliant les nervures périphériques, dans lequel le segment de cage de palier est formé en une matière plastique et présente un agencement de couplage (13), qui est réalisé de façon à disposer le segment de cage de palier (10; 30; 70; 80; 90) sur au moins un anneau de support (21; 22; 23; 24; 25) au moyen d'un assemblage à déclic, de telle manière qu'une poche destinée à contenir un corps de roulement (63) puisse être formée au moyen de deux segments de cage de palier (10; 30; 70; 80; 90) disposés sur l'anneau de support (21; 22; 23; 24; 25) en étant voisins dans la direction périphérique, dans lequel l'agencement de couplage (13) comprend un logement élastique (14; 16) formé dans au moins une des nervures périphériques (11) pour recevoir par emboîtement ledit au moins un anneau de support (21; 22; 23; 24; 25), dans lequel le logement élastique présente une partie de rigole (14; 16) pour l'assemblage à déclic avec ledit au moins un anneau de support (21; 22; 23; 24; 25), dans lequel la partie de rigole est formée dans un côté de la première nervure périphérique tourné vers la seconde nervure périphérique, dans lequel la partie de rigole présente des premières régions (14), qui sont configurées pour s'accrocher autour de l'anneau de support à partir du côté radialement intérieur, et présente en direction périphérique entre les premières régions une seconde région (16), qui est configurée pour s'accrocher à l'anneau de support à partir du côté radialement extérieur.

2. Segment de cage de palier (10; 30; 70; 80; 90) selon la revendication 1, dans lequel la nervure de liaison (12) reliant les deux nervures périphériques (11) s'étend en direction axiale, afin de maintenir les deux nervures périphériques (11) à une distance axiale prédéfinie l'une de l'autre, et dans lequel l'agencement de couplage (13) présente des logements élastiques (14; 16) formés dans chacune des deux nervures périphériques espacées axialement (11) afin de recevoir par emboîtement chaque fois un anneau de support (21; 22; 23; 24; 25).

3. Segment de cage de palier (10; 30; 70; 80; 90) selon l'une quelconque des revendications précédentes, dans lequel le logement élastique comprend une rigole élastique formée dans la matière plastique du segment de cage de palier, et qui présente une section transversale adaptée à l'anneau de support.

4. Segment de cage de palier (10; 30; 70; 80; 90) selon l'une quelconque des revendications précédentes, dans lequel l'agencement de couplage (13) comprend en outre un guidage (31) destiné à recevoir une crête d'onde (26) d'un anneau de support (23) ondulé en direction radiale, afin de fixer le segment de cage de palier en direction périphérique sur l'anneau de support au moyen de la crête d'onde.

5. Segment de cage de palier (10; 30; 70; 80; 90) selon l'une quelconque des revendications précédentes, dans lequel le segment de cage de palier est formé d'une seule pièce en ladite matière plastique.

6. Cage de palier (50; 55) pour un palier à roulement (60; 100), qui est formée d'une multiplicité de segments de cage de palier (10; 30; 70; 80; 90) selon l'une quelconque des revendications précédentes, disposés sur au moins un anneau de support (21; 22; 23; 24; 25).

7. Cage de palier selon la revendication 6, dans laquelle chacun de la multiplicité des segments de cage de palier (10; 30; 70; 80; 90) présente respectivement dans les deux nervures périphériques un logement élastique (14; 16) pour recevoir par emboîtement un anneau de support (21; 22; 23; 24; 25), dans laquelle un logement élastique (14; 16) est formé dans un côté d'une première nervure périphérique tourné vers une seconde nervure périphérique, et dans laquelle les segments de cage de palier (10; 30; 70; 80; 90) sont maintenus en direction périphérique par deux anneaux de support maintenus dans les logements des nervures périphériques.

8. Procédé de fabrication d'une cage de palier (50; 55) pour un palier à roulement (60; 100), présentant les étapes suivantes:
préparer au moins un anneau de support (21; 22; 23; 24; 25) ;
préparer une multiplicité de segments de cage de palier (10; 30; 70; 80; 90) en matière plastique comportant respectivement deux nervures périphériques (11) s'étendant en direction périphérique et au moins une nervure de liaison (12) reliant les nervures périphériques (11), dans lequel chacun des segments de cage de palier (10; 30; 70; 80; 90) présente un agencement de couplage (13), qui est réalisé de façon à disposer le segment de cage de palier (10; 30; 70; 80; 90) sur ledit au moins un anneau de support (21; 22; 23; 24; 25) au moyen d'un assemblage à déclic, dans lequel l'agencement de couplage (13) comprend un logement élastique (14; 16) formé dans au moins une des nervures périphériques (11) afin de recevoir par emboîtement ledit au moins un anneau de support (21; 22; 23; 24; 25), dans lequel le logement élastique présente une partie de rigole (14; 16) pour l'assemblage à déclic avec ledit au moins un anneau de support (21; 22; 23; 24; 25), dans lequel la partie de rigole est formée dans un côté d'une première nervure périphérique tourné vers une seconde nervure périphérique, dans lequel la partie de rigole présente des premières régions (14), qui sont configurées pour s'accrocher autour de l'anneau de support à partir du côté radialement intérieur, et présente en direction périphérique entre les premières régions une seconde région (16), qui est configurée pour s'accrocher autour de l'anneau de support à partir du côté radialement extérieur; et
disposer la multiplicité de segments de cage de palier (10; 30; 70; 80; 90) sur ledit au moins un anneau de support métallique (21; 22; 23; 24; 25), de telle manière qu'une poche (51) destinée à recevoir un corps de roulement (63) soit formée au moyen de deux segments de cage de palier (10; 30; 70; 80; 90) disposés sur l'anneau de support en étant voisins en direction périphérique.
